# EUROPEAN PATENT SPECIFICATION

(11) **EP 4 502 305 B1**
(45) Date of publication and mention of the grant of the patent: **17.06.2026**
(21) Application number: 23780126.1
(22) Date of filing: 24.03.2023
(51) Int. Cl.: E02F 9/26, E02F 9/20, E02F 9/22, G07C 5/00, G07C 5/08, H04N 7/18

(54) **EXCAVATOR, EXCAVATOR MANAGEMENT SYSTEM, AND EXCAVATOR ASSISTING DEVICE**
BAGGER, BAGGERVERWALTUNGSSYSTEM UND BAGGERHILFSVORRICHTUNG
EXCAVATRICE, SYSTÈME DE GESTION D'EXCAVATRICE ET DISPOSITIF D'AIDE À L'EXCAVATRICE

(30) Priority: 31.03.2022 JP 2022060816
(43) Date of publication of application: 05.02.2025
(73) Proprietor: Sumitomo Construction Machinery Co., Ltd., Tokyo 141-6025 (JP)
(72) Inventor: SHINKAI, Kazuma, Chiba-shi, Chiba 263-0001 (JP)
(74) Representative: Louis Pöhlau Lohrentz
(86) International application number: PCT/JP2023/011734
(87) International publication number: WO 2023/190116

(56) References cited:
- EP-A1- 3 744 574
- WO-A1-2019/181923
- WO-A1-2021/054417
- WO-A1-2021/054417
- CN-A- 114 008 274
- US-A1- 2014 223 235

## Description

### TECHNICAL FIELD

The present invention relates to an excavator, a management system of an excavator, and a support apparatus of an excavator.

### BACKGROUND ART

Conventionally, a technology has been known in which an excavator having an imaging device transmits imaged video data to an external device, such as a monitoring device. Such a device is known from WO2019/181923A1.

### CITATION LIST

### PATENT DOCUMENT

Patent Document 1: WO 2012/157603

### SUMMARY OF INVENTION

### TECHNICAL PROBLEM

When video data is transmitted from an excavator to an external device as in the above-described conventional technology, the communication load increases.

In view of the above problem, it is an object of the present invention to reduce the communication load.

### SOLUTION TO PROBLEM

An excavator according to an embodiment of the present invention is an excavator including an upper turning body; a lower traveling body; and a communication control part configured to transmit, to a management apparatus, Controller Area Network (CAN) data associated with video data transmitted from a device different from the excavator.

A management system of an excavator according to an embodiment of the present invention is a management system including the excavator including an upper turning body, and a lower traveling body; a support apparatus of the excavator; and a management apparatus of the excavator, wherein the support apparatus transmits, to the management apparatus, video data of the excavator captured by the support apparatus, and the excavator transmits, to the management apparatus, CAN data associated with the video data.

A support apparatus of an excavator according to an embodiment of the present invention is a support apparatus that collaborates with the excavator including an upper turning body and a lower traveling body, wherein the support apparatus transmits, to a management apparatus, video data associated with CAN data transmitted from the excavator to the management apparatus.

### ADVANTAGEOUS EFFECTS OF INVENTION

The communication load can be reduced.

### BRIEF DESCRIPTION OF DRAWINGS

[FIG. 1] FIG. 1 is a diagram illustrating an example of a system configuration of a management system of an excavator.
[FIG. 2] FIG. 2 is a diagram explaining a hardware configuration of each apparatus of a management system of an excavator.
[FIG. 3] FIG. 3 is a diagram explaining a function of each apparatus of a management system of an excavator.
[FIG. 4] FIG. 4 is a sequence diagram explaining an operation of a management system of an excavator.
[FIG. 5] FIG. 5 is a diagram illustrating an example of management information.
[FIG. 6A] FIG. 6A is a first diagram illustrating a display example of a support apparatus.
[FIG. 6B] FIG. 6B is a second diagram illustrating a display example of a support apparatus.
[FIG. 6C] FIG. 6C is a third diagram illustrating a display example of a support apparatus.
[FIG. 7] FIG. 7 is a diagram illustrating a display example of a management apparatus.

### DESCRIPTION OF EMBODIMENTS

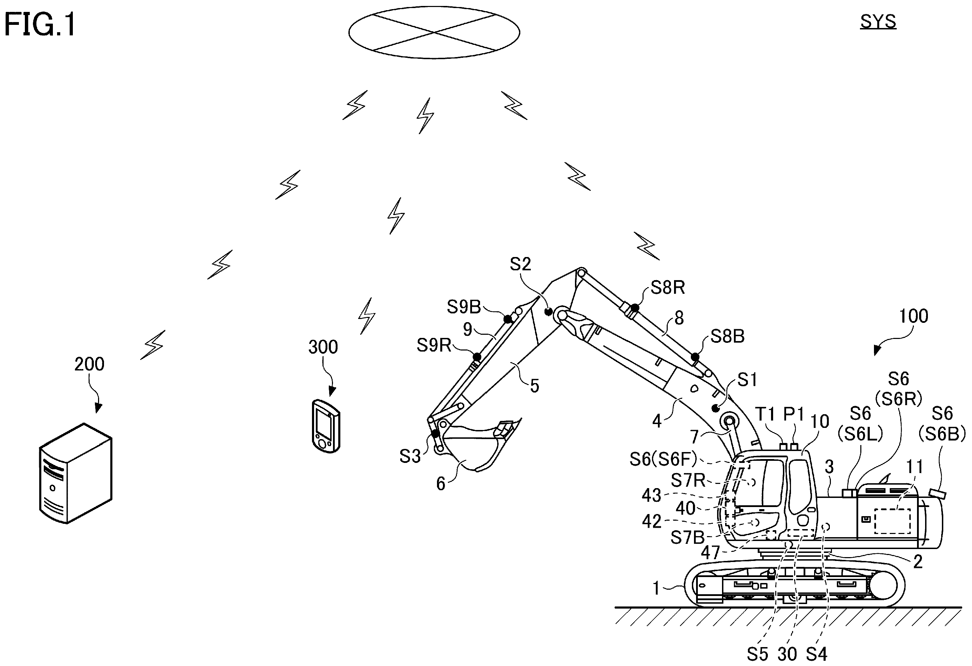

A management system of an excavator of the present embodiment will be described below with reference to the drawings. FIG. 1 is a diagram illustrating an example of the system configuration of the management system of an excavator. In the present embodiment, an excavator 100 will be described as an example of a construction machine.

A management system SYS of an excavator of the present embodiment includes the excavator 100, a management apparatus 200, and a support apparatus 300. In the following description, the management system SYS of the excavator 100 will be simply referred to as the management system SYS.

In the management system SYS of the present embodiment, the excavator 100, the management apparatus 200, and the support apparatus 300 are connected via a network or the like. Moreover, wireless communication based on a short-range wireless communication standard, such as Bluetooth (registered trademark), is performed between the excavator 100 and the support apparatus 300.

First, the configuration of the excavator 100 of the present embodiment will be described. FIG. 1 illustrates a side view of the excavator 100.

The excavator 100 has a lower traveling body 1, a turning mechanism 2, and an upper turning body 3. In the excavator 100, the upper turning body 3 is rotatably mounted on the lower traveling body 1 via the turning mechanism 2. A boom 4 is attached to the upper turning body 3. An arm 5 is attached to the tip of the boom 4, and a bucket 6 as an end attachment is attached to the tip of the arm 5.

The boom 4, the arm 5, and the bucket 6 constitute an excavation attachment as an example of an attachment. The boom 4 is driven by a boom cylinder 7, the arm 5 is driven by an arm cylinder 8, and the bucket 6 is driven by a bucket cylinder 9. A boom angle sensor S1 is attached to the boom 4, an arm angle sensor S2 is attached to the arm 5, and a bucket angle sensor S3 is attached to the bucket 6.

The boom angle sensor S1 is configured to detect the rotation angle of the boom 4. In the present embodiment, the boom angle sensor S1 is an acceleration sensor, and can detect the rotation angle (hereinafter, referred to as a "boom angle") of the boom 4 with respect to the upper turning body 3. The boom angle, for example, becomes a minimum angle when the boom 4 is lowered to the maximum, and becomes larger as the boom 4 is raised.

The arm angle sensor S2 is configured to detect the angle of rotation of the arm 5. In the present embodiment, the arm angle sensor S2 is an acceleration sensor and can detect the angle of rotation (hereinafter, referred to as an "arm angle") of the arm 5 with respect to the boom 4. The arm angle has a minimum angle when the arm 5 is fully closed, for example, and increases as the arm 5 is opened.

The bucket angle sensor S3 is configured to detect the angle of rotation of the bucket 6. In the present embodiment, the bucket angle sensor S3 is an acceleration sensor and can detect the angle of rotation (hereinafter, referred to as a "bucket angle") of the bucket 6 with respect to the arm 5. The bucket angle has a minimum angle when the bucket 6 is fully closed, for example, and increases as the bucket 6 is opened.

The boom angle sensor S1, the arm angle sensor S2, and the bucket angle sensor S3 may each be a potentiometer using a variable resistor, a stroke sensor for detecting the stroke of the corresponding hydraulic cylinder, a rotary encoder for detecting the angle of rotation around the connecting pin, a gyro sensor, or a combination of an acceleration sensor and a gyro sensor.

A boom rod pressure sensor S7R and a boom bottom pressure sensor S7B are attached to the boom cylinder 7. An arm rod pressure sensor S8R and an arm bottom pressure sensor S8B are attached to the arm cylinder 8.

A bucket rod pressure sensor S9R and a bucket bottom pressure sensor S9B are attached to the bucket cylinder 9. The boom rod pressure sensor S7R, the boom bottom pressure sensor S7B, the arm rod pressure sensor S8R, the arm bottom pressure sensor S8B, the bucket rod pressure sensor S9R, and the bucket bottom pressure sensor S9B are also collectively referred to as "cylinder pressure sensors".

The boom rod pressure sensor S7R detects the pressure (hereinafter, referred to as "boom rod pressure") in the rod-side oil chamber of the boom cylinder 7, and the boom bottom pressure sensor S7B detects the pressure (hereinafter, referred to as "boom bottom pressure") in the bottom-side oil chamber of the boom cylinder 7. The arm rod pressure sensor S8R detects the pressure (hereinafter, referred to as "arm rod pressure") in the rod-side oil chamber of the arm cylinder 8, and the arm bottom pressure sensor S8B detects the pressure (hereinafter, referred to as "arm bottom pressure") in the bottom-side oil chamber of the arm cylinder 8.

The bucket rod pressure sensor S9R detects the pressure (hereinafter, referred to as "bucket rod pressure") in the rod-side oil chamber of the bucket cylinder 9, and the bucket bottom pressure sensor S9B detects the pressure (hereinafter, referred to as "bucket bottom pressure") in the bottom-side oil chamber of the bucket cylinder 9.

The upper turning body 3 is provided with a cabin 10 serving as an operator's cabin and a power source, such as an engine 11. A sensor for detecting the amount of CO₂ emissions may be provided in the vicinity of the exhaust mechanism of the engine 11.

Further, the upper turning body 3 is provided with a controller 30, a display device 40, an input device 42, an audio output device 43, a storage device 47, a positioning device P1, a machine body inclination sensor S4, a turning angular speed sensor S5, an imaging device S6, and a communication terminal T1.

The upper turning body 3 may be provided with a power storage part for supplying power, a motor-generator for generating power using the rotational driving force of the engine 11, and the like. The power storage part may be, for example, a capacitor, a lithium-ion battery, or the like. The motor-generator may function as a motor to drive a mechanical load, or may function as a generator to supply power to the electric load.

The controller 30 functions as a main control part for controlling the drive of the excavator 100. In the present embodiment, the controller 30 is configured by a computer including a CPU (Central Processing Unit), RAM (Random Access Memory), ROM (Read Only Memory), and the like. The various functions of the controller 30 are implemented, for example, by the CPU executing a program stored in the ROM. The various functions may include, for example, at least one of a machine guidance function for guiding the manual operation of the excavator 100 by the operator or a machine control function for automatically supporting the manual operation of the excavator 100 by the operator.

The display device 40 is configured to display various kinds of information. The display device 40 may be connected to the controller 30 via a communication network, such as a CAN, or may be connected to the controller 30 via an exclusive-use line.

The input device 42 is configured to allow the operator to input various kinds of information to the controller 30. The input device 42 includes at least one of a touch panel, a knob switch, a membrane switch, or the like installed in the cabin 10.

The audio output device 43 is configured to output audio. The audio output device 43 may be, for example, an on-vehicle speaker connected to the controller 30 or an alarm, such as a buzzer. In the present embodiment, the audio output device 43 is configured to output various kinds of information in audio in response to an audio output instruction from the controller 30.

The storage device 47 is configured to store various kinds of information. The storage device 47 is, for example, a nonvolatile storage medium, such as a semiconductor memory. The storage device 47 may store information output by various kinds of devices during the operation of the excavator 100, or may store information acquired via various kinds of devices before the operation of the excavator 100 is started.

The storage device 47 may store operation information and the like of the excavator 100. Specifically, the operation information of the excavator 100 includes position information indicating the current position of the excavator, orientation information indicating the orientation of the excavator, posture information indicating the posture of the excavator, work content information indicating the work content, load rate information indicating the load rate, cumulative time information indicating the cumulative time of the operation time, fuel information including the fuel injection amount, the CO₂ emission amount, the work amount, and the like. The operation information may be periodically transmitted to the management apparatus 200 by the communication terminal T1.

The positioning device P1 may be configured to measure the position of the upper turning body 3. The positioning device P1 may be configured to measure the orientation of the upper turning body 3. In the present embodiment, the positioning device P1 is a GNSS compass, for example, and detects the position and orientation of the upper turning body 3, and outputs the detected value to the controller 30. Therefore, the positioning device P1 may also function as an orientation detection device for detecting the orientation of the upper turning body 3. The orientation detection device may be an orientation sensor attached to the upper turning body 3.

The machine body inclination sensor S4 is configured to detect the inclination of the upper turning body 3. In the present embodiment, the machine body inclination sensor S4 is an acceleration sensor for detecting the longitudinal inclination angle around the longitudinal axis and the lateral inclination angle around the lateral axis of the upper turning body 3 with respect to the virtual horizontal plane. The longitudinal axis and the lateral axis of the upper turning body 3 are orthogonal to each other at an excavator center point which is a point on the pivot axis of the excavator 100, for example.

The turning angular speed sensor S5 is configured to detect the turning angular speed of the upper turning body 3. The turning angular speed sensor S5 may be configured to detect or calculate the turning angle of the upper turning body 3. In the present embodiment, the turning angular speed sensor S5 is a gyro sensor. The turning angular speed sensor S5 may be a resolver, a rotary encoder, or the like.

The imaging device S6 is an example of a space recognition apparatus, and is configured to acquire an image around the excavator 100. In the present embodiment, the imaging device S6 includes a front camera S6F for imaging the space in front of the excavator 100, a left camera S6L for imaging the space to the left of the excavator 100, a right camera S6R for imaging the space to the right of the excavator 100, and a rear camera S6B for imaging the space behind the excavator 100.

The imaging device S6 is, for example, a monocular camera having an imaging device, such as a CCD or CMOS, and outputs a captured image to the display device 40. The imaging device S6 may be a stereo camera, a range image camera, or the like. The imaging device S6 may be replaced with another spatial recognition device, such as a three-dimensional range image sensor, an ultrasonic sensor, a millimeter-wave radar, a LIDAR, or an infrared sensor, or a combination of another spatial recognition device and a camera.

The front camera S6F is, for example, mounted on the ceiling of the cabin 10, that is, inside the cabin 10. However, the front camera S6F may be mounted outside the cabin 10, such as on the roof of the cabin 10 or on the side of the boom 4. The left camera S6L is mounted on the left end of the upper surface of the upper turning body 3, the right camera S6R is mounted on the right end of the upper surface of the upper turning body 3, and the rear camera S6B is mounted on the rear end of the upper surface of the upper turning body 3.

The communication terminal T1 is configured to control communication with external devices located outside the excavator 100. In the present embodiment, the communication terminal T1 controls communication with external devices via a satellite communication network, a cellular phone communication network, an Internet network, or the like. The external devices are, for example, a management apparatus 200, such as a server installed in an external facility, and a support apparatus 300, such as a smartphone carried by workers around the excavator 100.

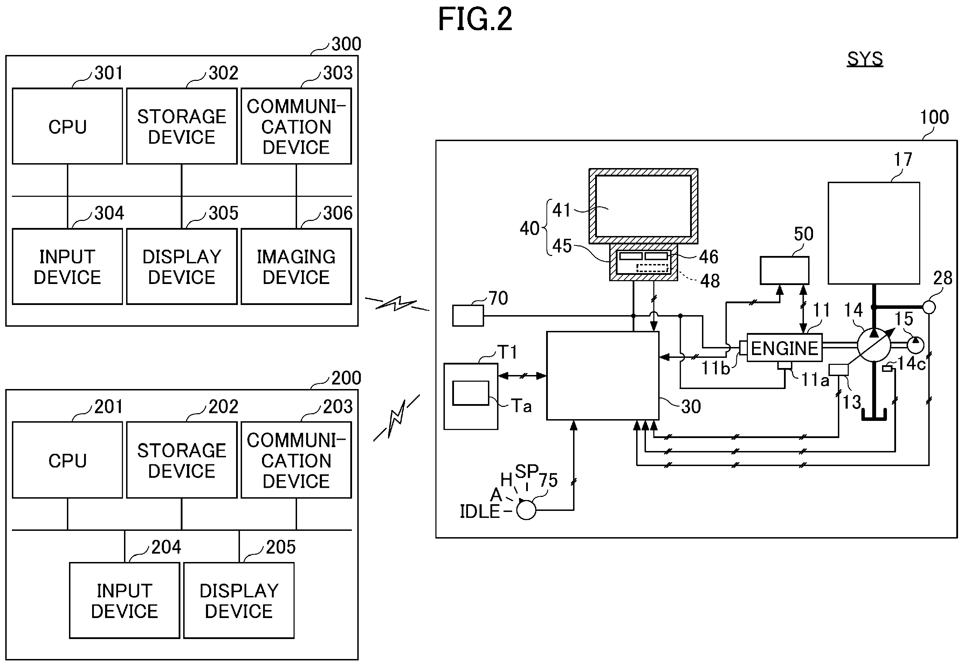

In the excavator 100 of the present embodiment, the above-described various sensors, the controller 30, the engine control part 50 (see FIG. 2) described later, and the like are connected to each other in a communicable manner by a CAN (Controller Area Network), and each of these elements transmits and receives data via the CAN. That is, the controller 30 of the present embodiment receives output values output from various sensors, signals output from the engine control part 50, and the like via the CAN.

In the present embodiment, the data thus transmitted and received on the CAN is referred to as CAN data. That is, the CAN data of the present embodiment is data transmitted and received on an internal communication network that interconnects the elements of the excavator 100. The CAN data includes state quantity information representing the state quantity of the excavator 100. The state quantity information includes, for example, detected values (output values), such as the hydraulic oil temperature, the engine water temperature, the engine fuel injection pressure, the pressure of the boom cylinder 7, the pressure of the arm cylinder 8, the pressure of the bucket cylinder 9, the pressure of the turning hydraulic motor 2A, the discharge pressure of the main pump 14, the operation pressure of each operation lever, the control pressure of the regulator 13 and the like. The state quantity information may include instruction value information. The instruction value information includes, for example, an instruction value of the engine rotation speed, an instruction value of each operation lever, an instruction value to the control valve, an instruction value to the main pump 14, and the like. However, the state quantity information acquired by the controller 30 is not limited to the above and may be other information as long as the information is detected by a sensor provided in the excavator 100 or an instruction value generated by the excavator 100.

In response to an instruction from the support apparatus 300, the communication terminal T1 of the present embodiment causes the controller 30 to output the CAN data and starts storing the CAN data. The communication terminal T1 may have a storage device for storing the CAN data.

In response to an instruction from the support apparatus 300, the communication terminal T1 completes storing the CAN data and instructs the controller 30 to stop outputting the CAN data.

At this time, the communication terminal T1 stores information indicating the date and time when storing of the CAN data was started (in the following, storage start time information) and the machine number of the excavator 100 in association with the CAN data. When transmitting the CAN data to the management apparatus 200, the communication terminal T1 transmits the storage start time information and the machine number associated with the CAN data to the management apparatus 200 together with the CAN data.

The support apparatus 300 of the present embodiment transmits a signal instructing the excavator 100 to switch between a normal state and a state in which CAN data is stored. Further, the support apparatus 300 captures the video data of the excavator 100 and transmits the captured video data to the management apparatus 200. The video data includes information (capturing start time information) indicating the date and time when capturing of the video data was started. When capturing the video of the excavator 100, the support apparatus 300 receives an operation to select the machine number of the excavator 100 to be captured. Then, the support apparatus 300 associates the selected machine number with the video data and transmits this information to the management apparatus 200.

The management apparatus 200 of the present embodiment stores the video data and the machine number transmitted from the support apparatus 300. The management apparatus 200 of the present embodiment also requests the excavator 100 to acquire the CAN data, and receives the CAN data, the storage start time information, and the machine number from the excavator 100.

At this time, the management apparatus 200 of the present embodiment identifies the video data synchronized with the CAN data from the machine number and the storage start time information associated with the CAN data. Specifically, the management apparatus 200 identifies the video data for which the associated machine number and the capturing start time information match the machine number and the storage start time information associated with the CAN data. Then, the management apparatus 200 outputs the synchronized CAN data and the video data together.

Thus, in the present embodiment, the support apparatus 300, which is an apparatus other than the excavator 100, acquires the video data of the excavator 100 and transmits the video data to the management apparatus 200. Further, in the present embodiment, the excavator 100 acquires the CAN data synchronized with the video data acquired by the support apparatus 300 and transmits the CAN data to the management apparatus 200. That is, the excavator 100 transmits to the management apparatus 200 the CAN data associated with the video data captured by a device other than the excavator 100.

Therefore, in the present embodiment, the video data is not included in the information transmitted from the excavator 100 to the management apparatus 200. Furthermore, in the present embodiment, when the excavator 100 receives a request to acquire the CAN data from the management apparatus 200, the excavator 100 transmits the CAN data to the management apparatus 200. Therefore, in the present embodiment, the amount of information transmitted and received between the excavator 100 and the management apparatus 200 can be reduced, and the communication load can be reduced.

In the example of FIG. 1, the management apparatus 200 is implemented by one information processing apparatus, but the present embodiment is not limited thereto. The management apparatus 200 may be implemented by a plurality of information processing apparatuses. That is, the functions implemented by the management apparatus 200 may be implemented by a plurality of information processing apparatuses.

Next, referring to FIG. 2, the hardware configuration of each apparatus of the management system SYS will be described. FIG. 2 is a diagram for explaining the hardware configuration of each apparatus of the excavator management system.

First, the hardware configuration of the excavator 100 will be described. The controller 30, the display device 40, the communication terminal T1, and the like are installed in the cabin 10.

The engine 11 is a diesel engine employing isochronous control for maintaining an engine rotation speed constant regardless of an increase or decrease in an engine load. The fuel injection amount, the fuel injection timing, and the like related to the engine 11 are controlled by an engine control part 50.

The rotary shaft of the engine 11 is connected to the rotary shafts of a main pump 14 and a pilot pump 15 as hydraulic pumps, respectively.

A regulator 13 is configured to control the displacement volume of the main pump 14. In the present embodiment, the regulator 13 controls the displacement volume of the main pump 14 by adjusting the swash plate tilt angle of the main pump 14 according to a control instruction from the controller 30. For example, the controller 30 changes the displacement volume of the main pump 14 by outputting a control instruction to the regulator 13 according to an output of a discharge pressure sensor 28 or the like. The regulator 13 is configured to transmit data representing the swash plate tilt angle to the controller 30.

The main pump 14 is configured to supply hydraulic oil to a control valve 17 via a hydraulic oil line. In the present embodiment, the main pump 14 is a swash plate type variable displacement hydraulic pump.

An oil temperature sensor 14c is configured to detect the temperature of the hydraulic oil flowing in the hydraulic oil line between the hydraulic oil tank and the main pump 14. The oil temperature sensor 14c is configured to transmit the detected data to the controller 30.

The pilot pump 15 is configured to supply hydraulic oil to various hydraulic control devices, such as an operation device, through a pilot line. In the present embodiment, the pilot pump 15 is a fixed displacement hydraulic pump. However, the pilot pump 15 may be omitted. In this case, the function performed by the pilot pump 15 may be implemented by the main pump 14. In this case, the main pump 14 may have a function of supplying hydraulic oil to an operation device or the like after reducing the pressure of the hydraulic oil by a throttle or the like, other than the function of supplying the hydraulic oil to the control valve 17.

The control valve 17 is a hydraulic control device for controlling the hydraulic system of the excavator 100. The control valve 17 is connected to hydraulic actuators, such as a hydraulic motor for right-side travel, a hydraulic motor for left-side travel, a boom cylinder 7, an arm cylinder 8, a bucket cylinder 9, and a hydraulic motor for turning.

The controller 30 is a control device for controlling the excavator 100. In the present embodiment, the controller 30 is composed of a microcomputer including a CPU, a volatile memory device, a nonvolatile memory device, and the like. Various functions of the controller 30 are implemented by the CPU executing a program stored in the nonvolatile memory device.

The display device 40 is mounted between the right pillar and the driver's seat, and is arranged so that an operator seated in the driver's seat can see the screen. The display device 40 can display various kinds of information in response to instructions from the controller 30. In the present embodiment, the display device 40 is a liquid crystal display connected to the controller 30.

The image display part 41 displays an image. A switch panel 45 is a panel including various hardware switches. The switch panel 45 may be a touch panel arranged on the image display part 41.

In the present embodiment, the display device 40 is configured to operate by receiving power supplied from a storage battery 70. The storage battery 70 is charged by power generated by an alternator 11a (generator) of the engine 11. The power of the storage battery 70 is also supplied to the controller 30, the communication terminal T1, and the like. For example, a starter 11b of the engine 11 is configured to be driven by power from the storage battery 70 to start the engine 11.

The communication terminal T1 is configured to control communication between the excavator 100 and external devices. In the present embodiment, the communication terminal T1 controls wireless communication between the excavator 100 or at least one of the support apparatus 300 and the management apparatus 200 through at least one of a satellite communication line, a mobile phone communication line, a short-range wireless communication line, or the like.

The communication terminal T1 also has a memory Ta. The memory Ta stores CAN data output from the controller 30.

The communication terminal T1 may store a communication terminal program for controlling the operation of the communication terminal T1 in a storage device in the communication terminal T1, and the storage device may be a different storage device from the memory Ta.

The engine control part 50 is configured to control the engine 11. The engine control part 50 is configured to transmit data indicating the state of the engine 11, such as cooling water temperature, to the controller 30.

An engine rotation speed adjustment dial 75 is a dial for adjusting the rotation speed of the engine 11. The engine rotation speed adjustment dial 75 transmits data indicating the setting state of the engine rotation speed to the controller 30. The engine rotation speed adjustment dial 75 is configured to switch the engine rotation speed in four levels, namely, an SP mode, an H mode, an A mode, and an idling mode. The SP mode is a rotation speed mode selected when priority is given to the amount of work, and utilizes the highest engine rotation speed. The H mode is a rotation speed mode selected when both the amount of work and the gas mileage are desired, and utilizes the second highest engine rotation speed. The A mode is a rotation speed mode selected when it is desired to operate the excavator 100 with low noise while prioritizing the gas mileage, and utilizes the third highest engine rotation speed. The idling mode is a rotation speed mode selected when the engine 11 is desired to be in an idling state, and the lowest engine rotation speed is utilized. The engine 11 is controlled to rotate at a constant engine rotation speed corresponding to the rotation speed mode set by the engine rotation speed adjustment dial 75.

Next, the hardware configuration of the management apparatus 200 of the present embodiment will be described. The management apparatus 200 of the present embodiment is a computer having a CPU 201, a storage device 202, a communication device 203, an input device 204, and a display device 205, which are connected to each other by buses.

The CPU 201 controls the entire operation of the management apparatus 200. The storage device 202 stores a program to be executed by the CPU 201, various kinds of information related to the excavator 100, and the like. The communication device 203 communicates with the excavator 100 and the support apparatus 300 via a network.

The input device 204 is for inputting information to the management apparatus 200, and is implemented by, for example, a keyboard or a pointing device. The display device 205 displays various kinds of information output from the management apparatus 200, and is implemented by a display or the like.

Next, the hardware configuration of the support apparatus 300 of the present embodiment will be described. The support apparatus 300 of the present embodiment is a computer having a CPU 301, a storage device 302, a communication device 303, an input device 304, a display device 305, and an imaging device 306, which are connected to each other by buses.

The CPU 301 controls the entire operation of the support apparatus 300. The storage device 302 stores various kinds of information, such as programs executed by the CPU 301, and programs downloaded from the management apparatus 200. The communication device 303 includes a wireless communication device for performing short-range wireless communication with the excavator 100, and an interface device for performing communication with the excavator 100 and the management apparatus 200 via a network, such as the Internet.

The input device 304 is for inputting information to the support apparatus 300, and is implemented by a touch panel or the like, for example. The display device 305 is for displaying various kinds of information output from the support apparatus 300, and is implemented by a display or the like. The imaging device 306 is a camera for capturing image data. The image data includes still image data and video data.

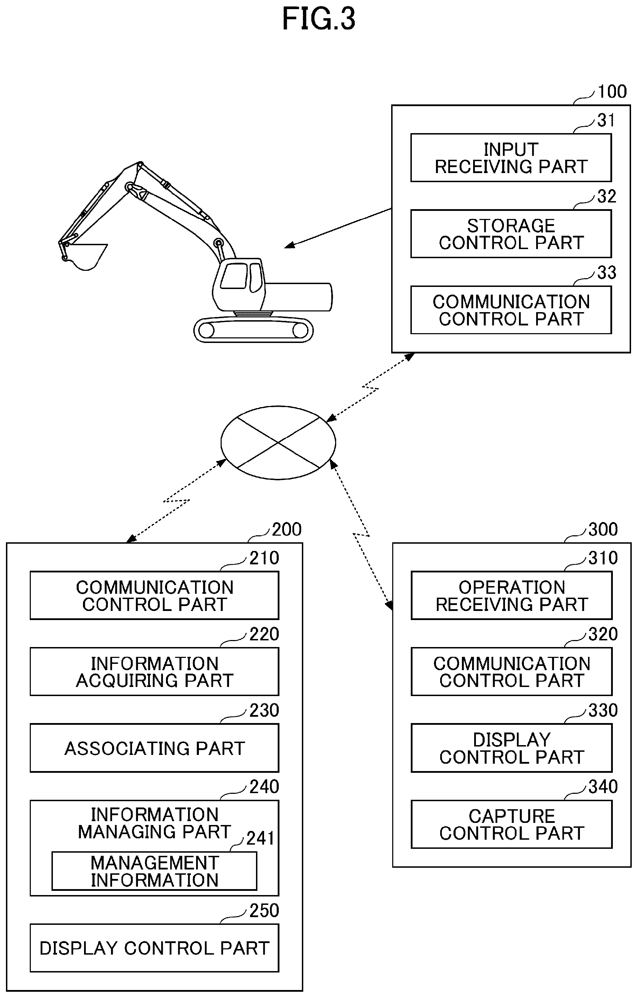

Next, the functions of each apparatus of the management system SYS according to the present embodiment will be described with reference to FIG. 3. FIG. 3 is a diagram for explaining the functions of each apparatus of the excavator management system.

First, the functions of the excavator 100 will be described. Each of the following elements is implemented mainly by the communication terminal T1 of the excavator 100 reading and executing a program stored in a storage device.

The excavator 100 of the present embodiment includes an input receiving part 31, a storage control part 32, and a communication control part 33.

The input receiving part 31 receives various inputs to the excavator 100. Specifically, the input receiving part 31 receives inputs of various instructions from the support apparatus 300.

The storage control part 32 performs control for storing the CAN data output from the controller 30 into the memory Ta of the communication terminal T1.

The communication control part 33 controls communication between the communication terminal T1 and the controller 30. Further, the communication control part 33 controls communication between the communication terminal T1 and the support apparatus 300 and the management apparatus 200.

Next, the functions of the management apparatus 200 will be described. The management apparatus 200 of the present embodiment includes a communication control part 210, an information acquiring part 220, an associating part 230, an information managing part 240, and a display control part 250.

The communication control part 210 controls communications between the management apparatus 200, the excavator 100, and the support apparatus 300. More specifically, the communication control part 210 receives video data transmitted from the support apparatus 300. Further, the communication control part 210 transmits a CAN data acquisition request to the excavator 100, and receives CAN data from the excavator 100.

The information acquiring part 220 acquires various types of information received by the communication control part 210. More specifically, the information acquiring part 220 acquires video data and CAN data of the excavator 100 received by the communication control part 210.

The associating part 230 associates the video data acquired by the information acquiring part 220 with the CAN data. Specifically, when the associating part 230 acquires the CAN data from the excavator 100, the associating part 230 refers to the machine number of the excavator 100 and the storage start time information received together with the CAN data, and identifies the video data in which the machine number associated with the video data matches the capturing start time information of the video data.

The associating part 230 associates the CAN data acquired from the excavator 100 with the video data acquired from the support apparatus 300.

The information managing part 240 stores the video data and the CAN data associated with each other by the associating part 230. Specifically, the information managing part 240 has the management information 241. The management information 241 is information in which the machine number of the excavator 100, the video data of the excavator 100, the CAN data of the excavator 100, and the time when the acquisition of the video data and the CAN data is started are associated with each other. Details of the management information 241 will be described later.

The display control part 250 controls display in the display device 205.

Next, the function of the support apparatus 300 will be described. The support apparatus 300 of the present embodiment includes an operation receiving part 310, a communication control part 320, a display control part 330, and a capture control part 340.

The operation receiving part 310 receives various operations on the support apparatus 300. Specifically, for example, the operation receiving part 310 receives an operation for instructing to switch the state of the excavator 100. Further, the operation receiving part 310 receives an operation for instructing to start or end capturing of video data and an operation for instructing to transmit (upload) video data.

The communication control part 320 controls communication between the support apparatus 300, the excavator 100, and the management apparatus 200.

The display control part 330 controls display of the display device 305. Specifically, the display control part 330 causes the display device 305 to display, for example, an operation screen for capturing video data.

The capture control part 340 controls the imaging device 306 according to the operation received by the operation receiving part 310.

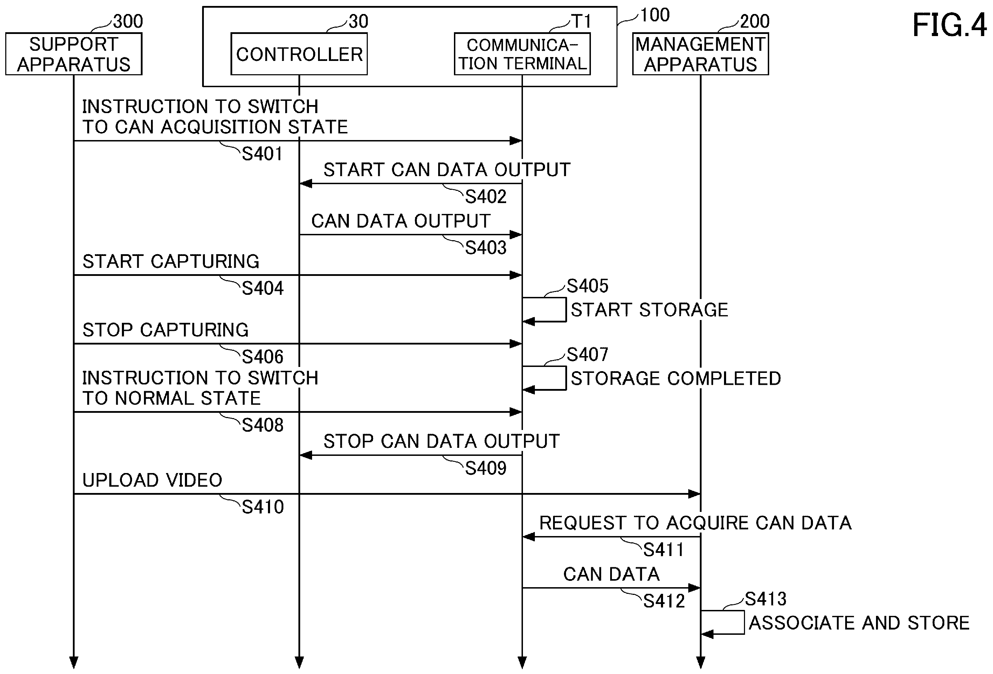

Next, the operation of the management system SYS according to the present embodiment will be described with reference to FIG. 4. FIG. 4 is a sequence diagram for explaining the operation of the excavator management system.

In the management system SYS of the present embodiment, the support apparatus 300 receives an operation for instructing the excavator 100 to switch from the normal state to the state of acquiring CAN data, and transmits a switch instruction to the excavator 100 (step S401).

The normal state of the excavator 100 and the state of acquiring CAN data in the present embodiment will now be described. In the following description, the normal state may be referred to as the normal state, and the state of acquiring CAN data may be referred to as the CAN acquisition state.

The normal state in the present embodiment is a state in which the CAN data received by the controller 30 is not stored in the memory Ta. That is, the normal state is a state in which the CAN data received by the controller 30 is sequentially discarded and the CAN data is not output from the controller 30.

On the other hand, the CAN acquisition state is a state in which the CAN data received by the controller 30 is output to the communication terminal T1 and stored in the memory Ta. That is, the CAN acquisition state is a state in which the CAN data received by the controller 30 is not discarded but is stored in the communication terminal T1.

In the excavator 100, when the communication terminal T1 receives an instruction for switching from the normal state to the CAN acquisition state by the input receiving part 31, the storage control part 32 transmits an output start instruction for instructing the controller 30 to output the CAN data (step S402).

The controller 30 receives the output start instruction and starts outputting the CAN data to the communication terminal T1 (step S403).

Subsequently, upon receiving an operation to instruct the start of capturing of the video data, the support apparatus 300 transmits a notification indicating the start of capturing to the excavator 100 (step S404). At this time, the support apparatus 300 may display on the display device 305 a selection screen for selecting the excavator 100 to be captured.

For example, a list of the excavators 100 connected to the support apparatus 300 via wireless communication may be displayed on the selection screen. When the excavator 100 is selected on the selection screen, the support apparatus 300 may display on the display device 305 a capturing screen for capturing the video data. Details of the selection screen and the capturing screen will be described later.

In the excavator 100, the communication terminal T1 receives a notification indicating the start of capturing by the input receiving part 31, and starts storing the CAN data output from the controller 30 to the memory Ta by the storage control part 32 (step S405).

The CAN data for which storing is started here is associated with the storing start time information indicating the date and time when the storing of the CAN data is started. The storing start time of the CAN data is when a notification indicating the start of capturing is received from the support apparatus 300.

Therefore, the storing start time information and the capturing start time information in the present embodiment are matching information.

The CAN data for which storing is started here is associated with the machine number of the excavator 100.

Next, when the support apparatus 300 receives an operation to instruct the stop of capturing of the video data, the support apparatus 300 transmits a notification indicating the stop of capturing to the excavator 100 (step S406).

In the excavator 100, the communication terminal T1 receives a notification indicating the stop of capturing from the input receiving part 31, and the storage control part 32 completes the storage of the CAN data output from the controller 30 into the memory Ta (step S407).

Next, when the support apparatus 300 receives an operation to instruct the switch from the CAN acquisition state to the normal state, the support apparatus 300 transmits a switch instruction to switch to the normal state to the excavator 100 (step S408).

In the excavator 100, the communication terminal T1 receives a switch instruction to switch to the normal state from the input receiving part 31, and the storage control part 32 transmits an output stop instruction for stopping the output of the CAN data to the controller 30 (step S409). The controller 30 receives the output stop instruction and stops the output of the CAN data to the communication terminal T1.

Subsequently, when the support apparatus 300 receives an operation instructing upload of the captured video data, the support apparatus 300 transmits the video data to the management apparatus 200 (step S410). The video data uploaded here includes capturing start time information including the date and time when capturing of the video data is started in step S404. The video data uploaded here is associated with the machine number of the excavator 100 as a capturing object.

After the video data is uploaded, the excavator 100 receives an acquisition request of CAN data from the management apparatus 200 (step S411). The acquisition request of CAN data may be transmitted from the management apparatus 200 to the excavator 100 by an operation of the manager or the like of the management apparatus 200.

In the excavator 100, when the communication terminal T1 receives an acquisition request of CAN data from the input receiving part 31, the communication control part 33 transmits the CAN data stored in the memory Ta to the management apparatus 200 (step S412).

When the management apparatus 200 acquires CAN data from the information acquiring part 220, the associating part 230 associates the CAN data with the video data, and stores the CAN data as management information 241 in the information managing part 240 (step S413). The method of association by the associating part 230 is as described above.

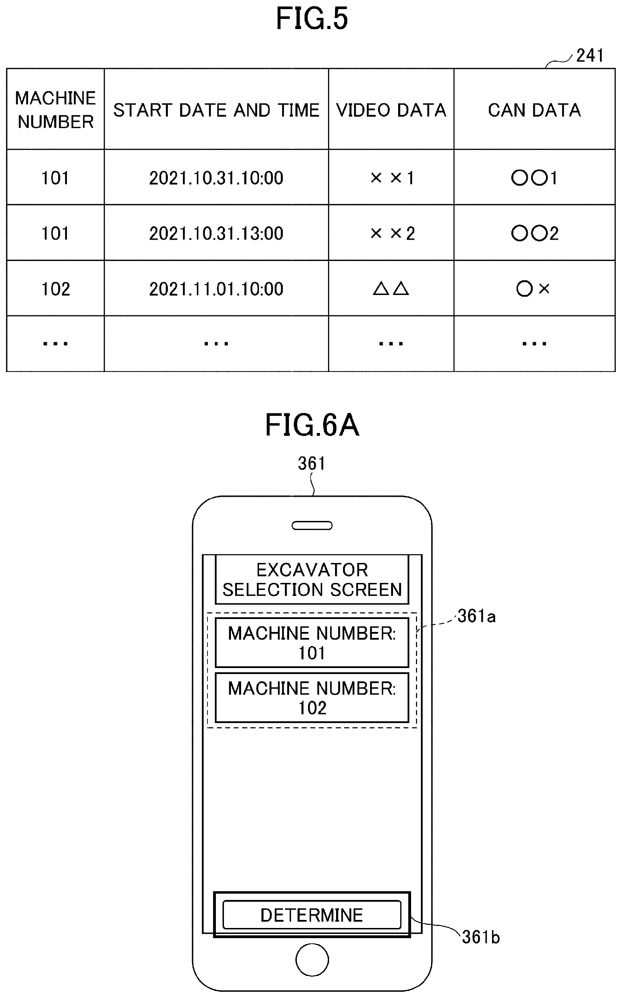

Next, the management information 241 of the present embodiment will be described with reference to FIG. 5. FIG. 5 is a diagram illustrating an example of the management information.

The management information 241 of the present embodiment includes, as items of information, an machine number, a start date and time, video data, and CAN data, and these items are associated with each other.

The value of the item "machine number" indicates an machine number for identifying the excavator 100. The value of the item "start date and time" indicates a date and time when acquisition of the video data and CAN data was started. In the present embodiment, the date and time when capturing of the video data was started in step S404 of FIG. 4 match the date and time when storing of the CAN data was started in step S405.

Therefore, the value of the item "start date and time" in the management information 241 indicates the date and time when acquisition of both the video data and the CAN data was started.

The value of the item "video data" indicates the video data acquired from the support apparatus 300, and the value of the item "CAN data" indicates the CAN data acquired from the excavator 100.

In the present embodiment, as described above, the video data and the CAN data acquired simultaneously by different apparatuses are associated as synchronized data in the management apparatus 200.

In the present embodiment, because the CAN data can be managed in association with the CAN data received from the support apparatus 300, there is no need to transmit the video data from the excavator 100 to the management apparatus 200, and the communication load between the excavator 100 and the management apparatus 200 can be reduced.

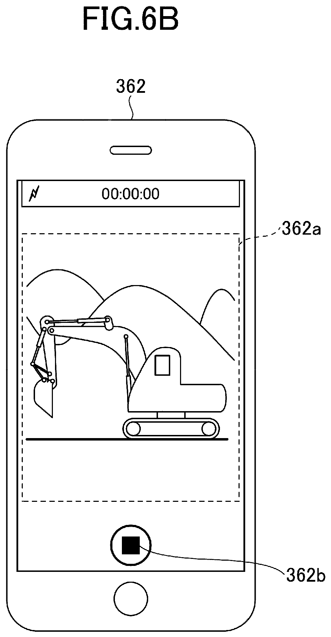

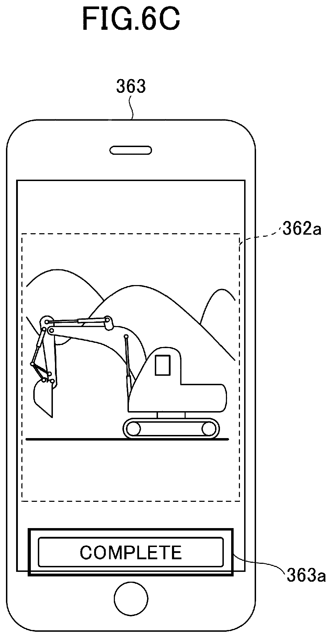

Next, a display example of the support apparatus 300 of the present embodiment will be described with reference to FIGS. 6A, 6B, and 6C. FIG. 6A is a first diagram for explaining a display example of the support apparatus, FIG. 6B is a second diagram for explaining a display example of the support apparatus, and FIG. 6C is a third diagram for explaining a display example of the support apparatus. FIG. 6A is an example of a screen for selecting the excavator 100, and FIGS. 6B and 6C are examples of a screen for capturing video data.

The screen 361 illustrated in FIG. 6A is displayed on the display device 305 when, for example, the excavator 100 to be captured is selected in step S404 of FIG. 4. The screen 362 illustrated in FIG. 6B is displayed on the display device 305 after, for example, the excavator 100 is selected in the selection screen. The screen 363 illustrated in FIG. 6C is displayed on the display device 305 when, for example, giving an instruction to stop capturing video data in step S406 of FIG. 4.

The screen 361 illustrated in FIG. 6A includes a display area 361a and an operation button 361b. The display area 361a displays a list of excavators 100 connected to the support apparatus 300 by wireless communication. Specifically, the list of excavators 100 displayed here may be, for example, excavators 100 performing work at the same work site.

The operation button 361b is an operation button for determining the excavator 100 selected in the list of excavators 100 as the excavator 100 to be captured.

On the screen 361, when the excavator 100 is selected and the operation button 361b is operated, the selection screen 361 transitions to the screen 362.

The screen 362 illustrated in FIG. 6B and the screen 363 illustrated in FIG. 6C are examples of capturing screens for video data, and have a display area 362a and an operation button 362b. A video of the excavator 100 is displayed on the display area 362a.

When the operation button 362b is operated on the screen 362, the support apparatus 300 starts capturing of video data and transmits a notification indicating the start of capturing to the excavator 100. The excavator 100 receives this notification and starts storing the CAN data in the communication terminal T1.

When capturing of video data is started in the support apparatus 300, the screen 362 transitions to the screen 363, and an operation button 363a is displayed.

The operation button 363a is an operation button for ending capturing of video data. When the operation button 363a is operated in the screen 363, the support apparatus 300 ends capturing of video data and transmits a notification indicating that capturing is stopped to the excavator 100. When the excavator 100 receives this notification, the excavator 100 ends storing of the CAN data by the communication terminal T1.

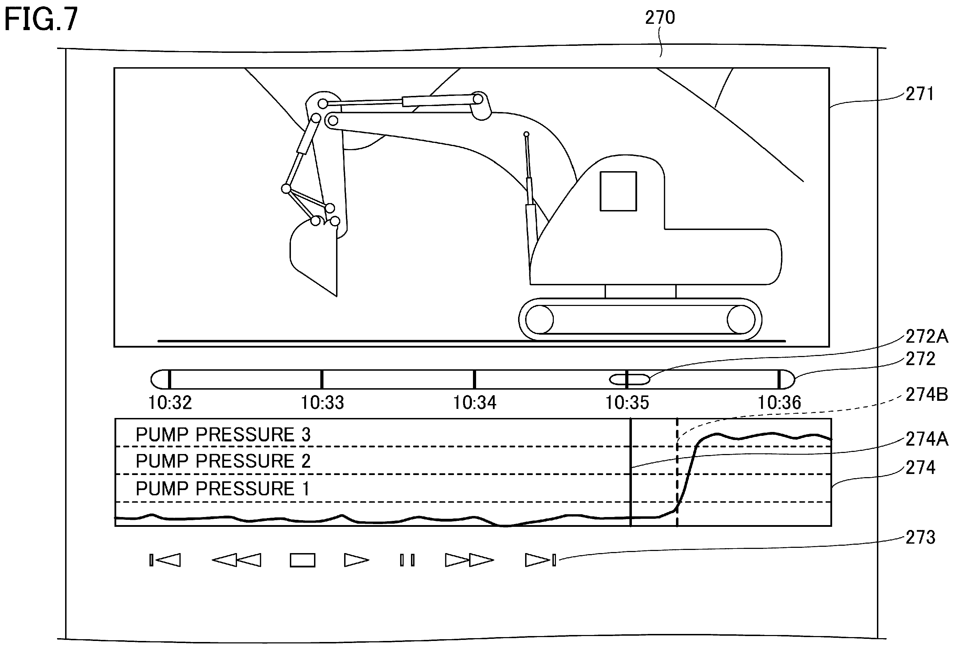

Next, a display example of the management apparatus 200 of the present embodiment will be described with reference to FIG. 7. FIG. 7 is a diagram for explaining a display example of the management apparatus.

The screen 270 illustrated in FIG. 7 displays, for example, video data and CAN data associated with each other in the information managing part 240 of the management apparatus 200.

The screen 270 displays an image display window 271, a progress status bar 272, an operation element 273, and a CAN data display window 274. The progress status bar 272 represents the time from the capturing start time to the capturing end time of the video data stored in the management apparatus 200. That is, the progress status bar 272 represents the time from the storing start time to the storing end time of the CAN data stored in the management apparatus 200.

When the slider 272A displayed in the progress status bar 272 is slid on the screen 270, an image of the time corresponding to the position of the slider 272A is displayed on the image display window 271. The length of the progress status bar 272 corresponds to the time span for which the time can be instructed with the slider 272A. As the time instructor, a numerical value input window for inputting the time in numerical values may be displayed instead of the slider 272A.

Further, on the screen 270, by operating the operation element 273, the video data can be replayed, scrolled forward, paused, or the like.

On the CAN data display window 274, a waveform indicated by the CAN data acquired in synchronization with the video data displayed on the image display window 271 is displayed. On the CAN data display window 274, a time line 274A is displayed at a position corresponding to the time indicated by the slider 272A (the time of the displayed image). Further, on the CAN data display window 274, an abnormality occurrence time line 274B may be displayed at a position where the excavator 100 is performing an operation determined to be abnormal.

Thus, according to the present embodiment, the CAN data acquired from the excavator 100 and the video data acquired **in** synchronization with the CAN data can be associated with each other and displayed on the management apparatus 200. Therefore, according to the present embodiment, the service person or the like using the management apparatus 200 can view the CAN data and the video data together, so that the service person or the like can easily identify the operation state and the operation status of the excavator 100.

### REFERENCE SIGNS LIST

- 1: lower traveling body
- 2: turning mechanism
- 3: upper turning body
- 30: controller
- 100: excavator
- 200: management apparatus
- 300: support apparatus

## Claims

1. An excavator (100) comprising:
an upper turning body (3)
a lower traveling body (1) and
a communication control part (210) **characterised in that** it is configured tc transmit, to a management apparatus, Controller Area Network (CAN) data associated with video data transmitted from a device different from the excavator.

2. The excavator according to claim 1,
wherein the CAN data is transmitted to the management apparatus together with a storage start time indicating a date and time when storage of the CAN data started.

3. The excavator according to claim 2,
wherein the CAN data includes a machine number for identifying the excavator.

4. The excavator according to claim 3,
wherein the CAN data is associated with the video data in the management apparatus based on the storage start time and the machine number.

5. The excavator according to claim 4,
wherein the communication control part
connects the excavator and the device by wireless communication, and
sets a capturing start time when the video data starts to be captured at the device as the storage start time of the CAN data.

6. A management system of an excavator, the management system comprising:
the excavator including
an upper turning body, and
a lower traveling body;
a support apparatus of the excavator; and
a management apparatus of the excavator, wherein
the support apparatus transmits, to the management apparatus, video data of the excavator captured by the support apparatus, and
the excavator transmits, to the management apparatus, CAN data associated with the video data.

7. A support apparatus of an excavator that collaborates with the excavator including an upper turning body and a lower traveling body, wherein
the support apparatus transmits, to a management apparatus, video data to be associated with CAN data transmitted from the excavator to the management apparatus.

## Patentansprüche

1. Bagger (100), umfassend:
einen oberen Drehkörper (3);
einen unteren Fahrkörper (1); und
ein Kommunikationssteuerungsteil (210), **dadurch gekennzeichnet, dass** es so konfiguriert ist, dass es Controller Area Network (CAN)Daten, die mit Videodaten, die von einer Vorrichtung, die verschieden von dem Bagger ist, übertragen werden, verknüpft sind, an eine Verwaltungsvorrichtung überträgt.

2. Bagger nach Anspruch 1, wobei die CAN-Daten zusammen mit einer Speicherstartzeit, die ein Datum und eine Zeit, zu der Speicherung der CAN-Daten gestartet wird, angibt, an die Verwaltungsvorrichtung übertragen werden.

3. Bagger nach Anspruch 2, wobei die CAN-Daten eine Maschinennummer zur Identifizierung des Baggers enthalten.

4. Bagger nach Anspruch 3, wobei die CAN-Daten mit den Videodaten in der Verwaltungsvorrichtung auf Grundlage der Speicherstartzeit und der Maschinennummer verknüpft sind.

5. Bagger nach Anspruch 4, wobei das Kommunikationssteuerungsteil
den Bagger und die Vorrichtung über drahtlose Kommunikation verbindet und
eine Aufnahmestartzeit, zu der die Videodaten starten, auf der Vorrichtung aufgenommen zu werden, als die Speicherstartzeit der CAN-Daten einstellt.

6. Verwaltungssystem eines Baggers, wobei das Verwaltungssystem umfasst:
den Bagger, umfassend
einen oberen Drehkörper und
einen unteren Fahrkörper;
eine Unterstützungsvorrichtung des Baggers; und
eine Verwaltungsvorrichtung des Baggers, wobei
die Unterstützungsvorrichtung Videodaten des Baggers, die von der Unterstützungsvorrichtung aufgenommen werden, an die Verwaltungsvorrichtung überträgt, und
der Bagger CAN-Daten, die mit den Videodaten verknüpft sind, an die Verwaltungsvorrichtung überträgt.

7. Unterstützungsvorrichtung eines Baggers, die mit dem Bagger, umfassend einen oberen Drehkörper und einen unteren Fahrkörper, zusammenarbeitet, wobei
die Unterstützungsvorrichtung Videodaten, die mit CAN-Daten, die von dem Bagger an die Verwaltungsvorrichtung übertragen werden, zu verknüpfen sind, an eineVerwaltungsvorrichtung überträgt.

## Revendications

1. Un excavatrice (100) comprenant :
un corps supérieur rotatif (3),
un corps inférieur mobile (1), et
une partie de commande de communication (210), **caractérisée en ce qu'**elle est configurée pour transmettre, à un appareil de gestion, des données de réseau de zone de controleur (CAN) associées à des données vidéo transmises depuis un dispositif différent de l'excavatrice.

2. L'excavatrice selon la revendication 1,
dans laquelle les données CAN sont transmises à l'appareil de gestion conjointement avec une heure de début de stockage indiquant une date et une heure auxquelles le stockage des données CAN a commencé.

3. L'excavatrice selon la revendication 2,
dans laquelle les données CAN comprennent un numéro de machine pour identifier l'excavatrice.

4. L'excavatrice selon la revendication 3, dans laquelle les données CAN sont associées aux données vidéo dans l'appareil de gestion sur la base de l'heure de début de stockage et du numéro de machine.

5. L'excavatrice selon la revendication 4,
dans laquelle la partie de commande de communication :
connecte l'excavatrice et le dispositif par communication sans fil, et
règle une heure de début de capture lorsque les données vidéo commencent à être capturées au niveau du dispositif comme l'heure de début de stockage des données CAN.

6. Un système de gestion d'une excavatrice, le système de gestion comprenant :
l'excavatrice comprenant :
un corps supérieur rotatif, et
un corps inférieur mobile ;
un dispositif d'aide de l'excavatrice ; et
un appareil de gestion de l'excavatrice, dans lequel :
le dispositif d'aide transmet, à l'appareil de gestion, des données vidéo de l'excavatrice capturées par le dispositif d'aide, et
l'excavatrice transmet, à l'appareil de gestion, des données CAN associées aux données vidéo.

7. Un appareil d'aide d'une excavatrice qui collabore avec l'excavatrice comprenant un corps supérieur rotatif et un corps inférieur mobile, dans lequel :
le dispositif d'aide transmet, à un appareil de gestion, des données vidéo à associer à des données CAN transmises depuis l'excavatrice à l'appareil de gestion.
